# EUROPEAN PATENT APPLICATION

(11) **EP 4 650 227 A1**
(43) Date of publication of application: **19.11.2025**
(21) Application number: 25174683.0
(22) Date of filing: 07.05.2025
(51) Int. Cl.: B60R 19/26, B62D 25/08

(54) **FRONT STRUCTURE OF VEHICLE**

(30) Priority: 14.05.2024 JP 2024078837
(71) Applicant: MAZDA MOTOR CORPORATION, Hiroshima 730-8670 (JP)
(72) Inventor: Takeuchi, Hayato, Hiroshima, 730-8670 (JP); Kuroki, Yui, Hiroshima, 730-8670 (JP); Shimono, Tomohiro, Hiroshima, 730-8670 (JP)
(74) Representative: Lorenz Seidler Gossel Part. mbB

(57) **Abstract**

The invention relates to a front structure of a vehicle comprises a pair of right-and-left front side frames (11) extending in a longitudinal direction and having a closed-cross section perpendicular to an extension direction thereof, respectively, and a cross member (12) extending in a width direction between the pair of right-and-left front side frames (11), wherein each of the front side frames (11) comprises an inner wall portion (11a) which is positioned on an inward side thereof, in the vehicle width direction, the inner wall portion (11a) has an inner recess portion (26), which is configured such that a front edge of the inner wall portion (11a) partially retreats rearward, and both-side portions, in the width direction, of the cross member (12) fit into said inner recess portions (26) of the inner wall portions (11a) from a forward side and are fixed to the inner wall portions (11a) of the front side frames (11).

## Description

### BACKGROUND OF THE INVENTION

The present invention relates to a front structure of a vehicle, and a vehicle comprising such a front structure.

JP 2018-199407 A discloses a vehicle front structure which comprises a pair of right-and-left front side members extending in a longitudinal direction, a front cross member extending between the pair of right-and-left front side members, and a pair of right-and-left joining members provided are respective front end portions of the pair of right-and-left front side members. In this vehicle front structure, each of the pair of right-and-left joining members includes a cylindrical insertion portion protruding inward, in a vehicle width direction, thereof. Both-side end portions of the front cross member are inserted into the right-and-left insertion potions for connection therebetween.

A so-called pole frontal-collision is known as one example of a vehicle's collision manner. In this pole frontal-collision, a pole-shaped obstacle, such as a utility (telephone) pole, hits against a central part, in the vehicle width direction, of the vehicle. A collision load is applied rearward to the front cross member in the pole frontal-collision. In this case, since the collision load is applied to the joining portion of the front cross member to the front side frame as a shearing load, so that there is a concern that the joining portion may get broken. Consequently, the front cross member may be detached from the front side frame, therefore the collision-load absorption performance of the front cross member may deteriorate.

### SUMMARY OF THE INVENTION

An object of the present invention is to provide a front structure of a vehicle which can effectively absorb the collision load in the pole frontal-collision of the vehicle.

The present invention is a front structure of a vehicle, comprising a pair of right-and-left front side frames extending in a longitudinal direction and having a closed-cross section perpendicular to an extension direction thereof, respectively, and a cross member extending in a width direction between the pair of right-and-left front side frames, wherein each of the front side frames comprises an inner wall portion which is positioned on an inward side thereof, in the width direction, the inner wall portion has an inner recess portion which is configured such that a front edge of the inner wall portion partially retreats rearward, and both-side portions, in the width direction, of the cross member fit into the inner recess portions of the inner wall portions from a forward side and are fixed to the inner wall portions of the front side frames.

According to the present invention, the both-side portions of the cross member fit into the respective recess portions of the inner wall portions of the pair of right-and-left front side frames from the forward side and are fixed to the inner wall portions of the front side frames. Consequently, since the collision load which is applied to the cross member due to the pole frontal-collision of the vehicle or the like is supported at the recess portions in an axial direction of the front side frame, it can be suppressed that this collision load is applied to the fixation portions of the cross member to the front side frames as the shearing load.

Thereby, the both-side portions of the cross member are suppressed from being detached from the pair of right-and-left front side frames in the pole frontal-collision of the vehicle. Therefore, the cross member is deformed such that it has a U-shaped rearward-protrusion shape in a plan view, so that the both front side frames are easily curved inward, in the vehicle width direction, thereof by a shortened distance between the both-side portions of the cross member. Accordingly, the collision-load absorption performance in the pole frontal-collision of the vehicle can be improved by the cross member and the pair of right-and-left front side frames.

According to the present invention, the collision load can be effectively absorbed in the pole frontal-collision.

The present invention will become apparent from the following description which refers to the accompanying drawings.

### BRIEF DESCRIPTION OF THE DRAWINGS

FIG. **1** is a plan view of a front structure of a vehicle according to an embodiment of the present invention.
FIG. **2** is a side view of the front structure of the vehicle of FIG. 1.
FIG. **3** is a perspective view of a front portion of a front side frame, when viewed from an oblique forward side.
FIG. **4** is a perspective view of a first cross member, when viewed from an oblique rearward side.
FIG. **5** is a perspective view of a joining portion of the first cross member to the front side frame, when viewed from the oblique rearward side.
FIG. **6** is a plan view schematically showing a deformation manner of the front structure of the vehicle in a pole frontal-collision.
FIG. 7 is a perspective view of a front portion of a front side frame according to a modification, when viewed from an oblique forward side.

### DETAILED DESCRIPTION OF THE INVENTION

Hereafter, a front structure of a vehicle according to an embodiment of the present invention will be described referring to the accompanying drawings.

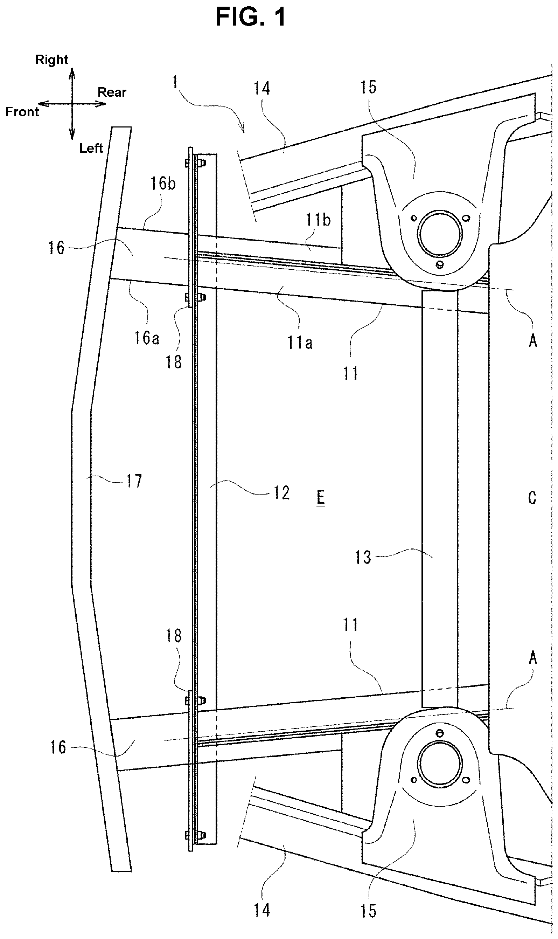

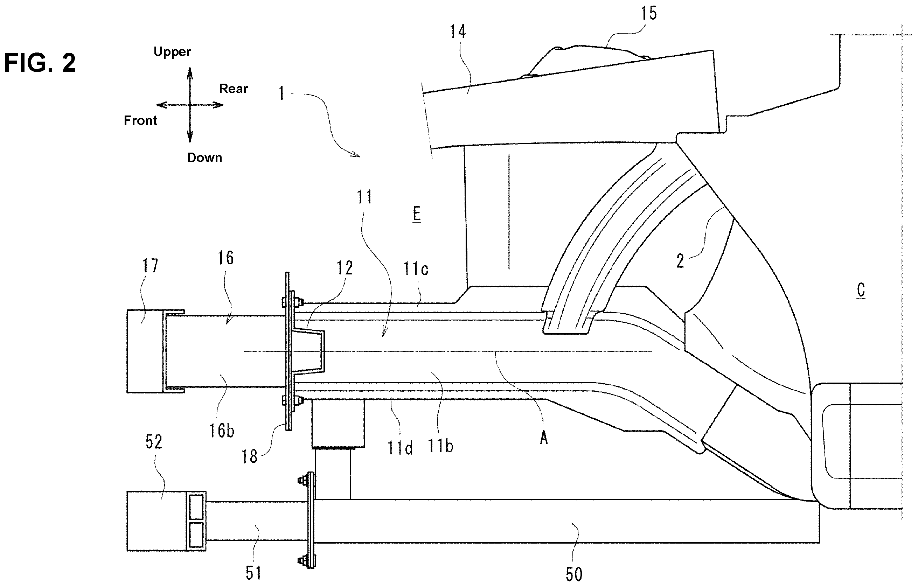

FIG. 1 is a plan view of a front structure 1 of the vehicle according to the present embodiment. FIG. 2 is a side view of the front structure 1 of the vehicle of FIG. 1. The front structure 1 of the vehicle of the present embodiment is the structure of an automobile or the like. Hereafter, there are some cases where a longitudinal direction, a width direction, and a vertical direction relative to the vehicle provided with the front structure **1** of the vehicle will be referred to as the "longitudinal direction," the "width direction," and the "vertical direction," respectively. Further, there are some cases where a center-line side of the vehicle in the width direction is referred to as the inward side, in the vehicle width direction, of the vehicle and an opposite side to a center line of the vehicle, in the width direction, of the vehicle is referred to as the outward side, in the vehicle width direction, of the vehicle. The vehicle width direction matches a lateral direction of the vehicle.

As shown in FIG. **1****,** the front structure **1** of the vehicle comprises a dash panel **2** (see FIG. **2****)** partitioning an engine room **E** from a cabin **C** in the longitudinal direction, a pair of right-and-left front side frames **11** extending from the dash panel **2** in an axial direction **A** which is inclined obliquely forward-and-outward, in the vehicle width direction, thereof at right-and-left both-side portions of the engine room **E,** and a first cross member **12** and a second cross member **13** which extend in the vehicle width direction between the right-and-left front side frames **11.** The first cross member **12** is positioned at a front end portion of the front side frames **11.** The second cross member **13** is positioned in back of the first cross member **12.**

The front structure **1** of the vehicle further comprises a pair of right-and-left apron reinforcements **14** which extend forward from the dash panel **2** on the outward side, in the vehicle width direction, and above the pair of right-and-left front side frames **11.** A suspension hosing **15** is provided between each of the front side frames **11** and each of the apron reinforcements **14.** A longitudinal position of the second cross member **13** substantially matches that of the suspension housing **15.**

The front structure **1** of the vehicle further comprises a pair of right-and-left crash cans **16** extending in the longitudinal direction in front of the first cross member **12** at their respective lateral positions corresponding to the right-and-left front side frames **11** and a bumper reinforcement **17** interconnecting respective front end portions of the right-and-left crash cans **16** in the vehicle width direction. The crash can **16** constitutes an impact absorbing member to absorb the collision load through its axial compressive deformation in a vehicle frontal collision or the like.

The crash can **16** extends in parallel to the axial direction **A** of the corresponding front side frame **11.** More specifically, the crash can **16** is arranged such that its inside face **16a** positioned on the inward side, in the vehicle width direction, thereof is substantially positioned at an forward-extension area of an inner wall portion **11a** of the corresponding front side frame **11** and also its outside face **16b** positioned on the outward side, in the vehicle width direction, thereof is substantially positioned at a forward-extension area of an outer wall portion **11b** of the corresponding front side frame **11.**

The crash can **16** is fixed to a front end portion of the first cross member **12** at its rear end portion via a set plate **18** by fastening, for example, and its front end portion is fixed to the bumper reinforcement **17** by welding, for example.

As shown in FIG. **2****,** the front structure **1** of the vehicle further comprises a subframe **50** which is located below the front side frames **11.** The subframe **50** is suspended from the front side frames **11** at its front-half part, and its rear-half part is fixed to a vehicle-body frame. In the present embodiment, the subframe **50** is a suspension cross member to suspend a front suspension and the like. The subframe **50** is further provided with a pair of right-and-left sub crash cans **51** extending forward at its front end portion and a sub bumper reinforcement **52** interconnecting respective front end portions of the sub crash cans **51** in the vehicle width direction. The sub crash can **51** constitutes the impact absorbing member like the crash can **16** as well.

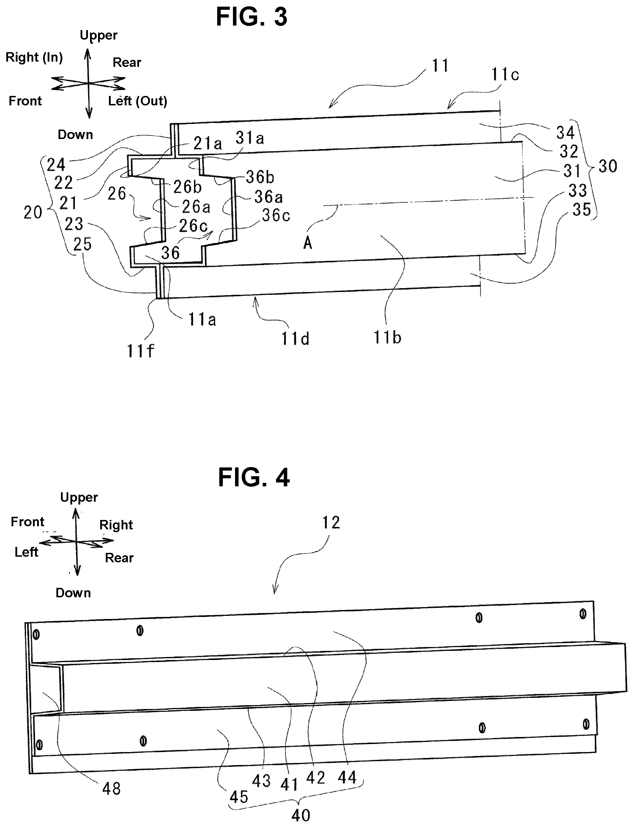

FIG. **3** shows the front side frame **11** positioned on the left alone, which is a perspective view of a surrounding area of the front end portion of the frame **11,** when viewed from a front-left side. As shown in FIG. **3****,** the front side frame **11** comprises a side frame inner **20** positioned on the inward side, in the vehicle width direction, thereof and a side frame outer **30** positioned on the outward side, in the vehicle width direction, thereof.

The side frame inner **20** of the present embodiment is formed to have a hat-shaped cross section perpendicular to the extension direction **A** which is open outward, which is made by steel-plate pressing. Specifically, the side frame inner **20** comprises an inner side-wall portion **21** extending in the vertical direction, an inner upper-wall portion **22** extending outward from an upper edge of the inner side-wall portion **21,** an inner lower-wall portion **23** extending outward from a lower edge of the inner side-wall portion **21,** an inner upper-flange portion **24** extending upward from an outer edge of the inner upper-wall portion **22,** and an inner lower-flange portion **25** extending downward from an outer edge of the inner lower-wall portion 23.

The inner side-wall portion **21** has an inner recess portion **26** which is configured such that a front edge **21a,** in the longitudinal direction, of the inner side-wall portion **21** partially retreats rearward in a side view. The inner recess portion **26** is formed by partially cutting-out a front end portion of the inner side-wall portion **21** such that this cutout portion is of a trapezoidal shape which is open to the forward side. The inner recess portion **26** is located at a roughly central position, in the vertical direction, of the inner side-wall portion **21.**

The inner recess portion **26** is partitioned by an inner recess-portion bottom edge **26a** extending in the vertical direction, an inner recess-portion upper edge **26b** connecting an upper end portion of the inner recess-portion bottom edge **26a** and the front edge **21a,** and an inner recess-portion lower edge **26c** connecting a lower end portion of the inner recess-portion bottom edge **26a** and front edge **21a.** The inner recess-portion upper edge **26b** extends obliquely rearward-and-downward. The inner recess-portion lower edge **26c** extends obliquely rearward-and-upward.

The side frame outer **30** of the present embodiment is formed to have a hat-shaped cross section perpendicular to the extension direction **A** which is open inward, which is made by steel-plate pressing. Specifically, the side frame outer **30** comprises an outer side-wall portion **31** extending in the vertical direction, an outer upper-wall portion **32** extending inward from an upper edge of the outer side-wall portion **31,** an outer lower-wall portion **33** extending inward from a lower edge of the outer side-wall portion **31,** an outer upper-flange portion **34** extending upward from an inner edge of the outer upper-wall portion **32,** and an outer lower-flange portion 35 extending downward from an inner edge of the outer lower-wall portion **33.**

The outer side-wall portion 31 has an outer recess portion **36** which is configured such that a front edge **31a,** in the longitudinal direction, of the outer side-wall portion **31** partially retreats rearward in the side view. The outer recess portion **36** is formed by partially cutting-out a front end portion of the outer side-wall portion **31** such that this cutout portion is of the trapezoidal shape which is open to the forward side. The outer recess portion **36** is located at a roughly central position, in the vertical direction, of the outer side-wall portion **31.**

The outer recess portion **36** is partitioned by an outer recess-portion bottom edge **36a** extending in the vertical direction, an outer recess-portion upper edge **36b** connecting an upper end portion of the outer recess-portion bottom edge **36a** and the front edge **31a,** and an outer recess-portion lower edge **36c** connecting a lower end portion of the outer recess-portion bottom edge **36a** and front edge **31a.** The outer recess-portion upper edge 36b extends obliquely rearward-and-downward. The outer recess-portion lower edge **36c** extends obliquely rearward-and-upward.

The front side frame **11** is configured to have a closed-cross section perpendicular to the axial direction **A** by joining the side frame inner **20** and the side frame outer **30.** That is, the inner upper-flange portion **24** and the outer upper-flange portion **34** are joined together by spot welding or the like, and also the inner lower-flange portion **25** and the outer lower-flange portion **35** are joined together by spot welding or the like.

The inner wall portion **11a** positioned on the inward side at the front side frame **11** is constituted by the inner side-wall portion **21.** The outer wall portion **11b** positioned on the outward side at the front side frame **11** is constituted by the outer side-wall portion **31.** An upper flange portion **11c** extending upward of the front side frame **11** is constituted by the inner upper-flange portion **24** and the outer upper-flange portion **34** which are joined together. A lower flange portion **11d** extending downward of the front side frame **11** is constituted by the inner lower-flange portion **25** and the outer lower-flange portion **35** which are joined together.

The front side frame **11** is configured to have a flat front-end face **11f.** That is, respective front-end faces of the side frame inner **20** and the side frame outer 30 are positioned such that they form the same flat face. In the present embodiment, the front end face **11f** of the front side frame **11** is located on a plane which is parallel to the extension direction of the first cross member **12** and the vertical direction (i.e., on the plane perpendicular to the longitudinal direction).

The inner recess portion **26** and the outer recess portion **36** are formed in the same shape when viewed in the extension direction of the first cross member **12.** Since the first cross member **12** extends in the vehicle width direction, the bottom edges **26a, 36a,** the upper edges **26b, 36b,** and the lower edges **26c, 36c** of the inner recess portion 26 and the outer recess portion **36** overlap each other in the vehicle side view.

FIG. **4** is a perspective view of the first cross member **12,** when viewed from a rear left side. As shown in FIG. **4****,** the first cross member **12** comprises a first cross body portion **40** positioned rearward and a first cross front-wall portion **48** positioned forward. The first cross front-wall portion **48** extends on a plane parallel to the vehicle width direction and the vertical direction.

The first cross body portion **34** of the present embodiment is provided to have a hat-shaped cross section perpendicular to the extension direction (vehicle width direction) which is open forward, which is made by steel-plate pressing. Specifically, the first cross body portion **40** comprises a cross rear-wall portion **41** extending in the vertical direction, a cross upper-wall portion **42** extending forward from an upper edge of the cross rear-wall portion **41,** a cross lower-wall portion **43** extending forward from a lower edge of the cross rear-wall portion **41,** a cross upper-flange portion **44** extending upward from a front edge of the cross upper-wall portion **42,** and a cross lower-flange portion **45** extending downward from a front edge of the cross lower-wall portion **43.** The shape of the cross section perpendicular to the extension direction of the first cross body portion **40** is uniform over its extension direction.

The cross upper-wall portion **42** extends obliquely rearward-and-downward, is parallel to the inner recess-portion upper edge **26b** and the outer recess-portion upper edge **36b,** and has the same length as these edges **26b, 36b** in the axial direction **A.** The cross lower-wall portion **43** extends obliquely rearward-and-upward, is parallel to the inner recess-portion lower edge **26c** and the outer recess-portion lower edge **36c,** and has the same length as these edges **26c, 36c** in the axial direction **A.** An upper end of the cross upper-flange portion **44** is located at the same level, in the vertical direction, as an upper end of the first cross front-wall portion **48.** A lower end of the cross lower-flange portion **45** is located above a lower end of the first cross front-wall portion **48.**

The first cross member **12** is configured to have a closed-cross section perpendicular to the axial direction by joining the first cross body portion **40** and the first cross front-wall portion **48.** That is, the cross upper-flange portion **44** and the cross lower-flange portion **45** of the first cross body portion **40** are joined to the first cross front-wall portion **48** from behind by spot welding or the like. This closed-cross section is uniform over the extension direction. The cross section of the first cross member **12** has a trapezoidal shape, which is configured such that its vertical height decreases gradually toward the rear side.

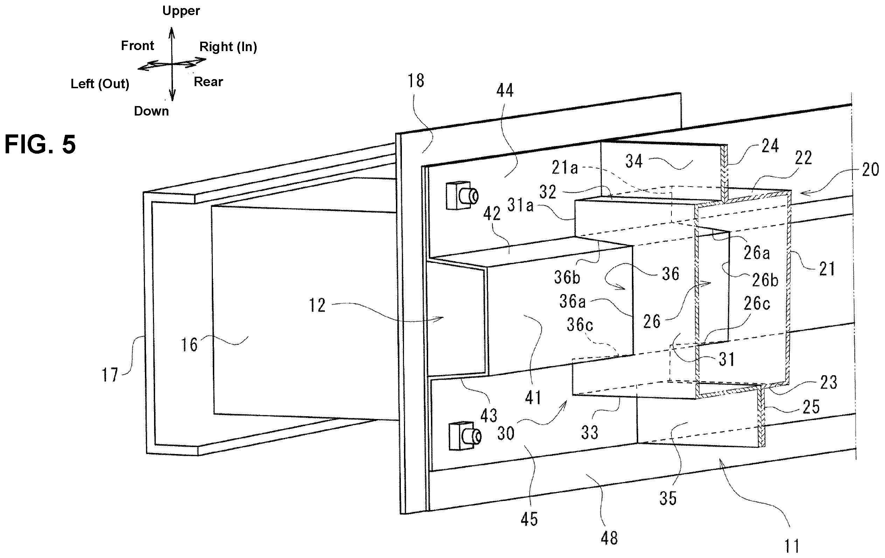

FIG. **5** is an enlarged perspective view around a joining portion of the left-side front side frame **11** to the first cross member **12,** when viewed from a rear left side. As shown in FIG. **5****,** the trapezoidal-shaped cross section of the first cross member **12** is configured to be complementary to the inner recess portion **26** and the outer recess portion **36** of the front side frame **11,** and this cross-section portion fits into the inner recess portion **26** and the outer recess portion **36** from the forward side.

In the present embodiment, the first cross member **12** penetrates the front side frame **11** in the vehicle width direction. That is, the first cross member **12** extends outward, in the vehicle width direction, beyond the outer side-wall portion **32** of the front side frame **11.** Further, in the present embodiment, the first cross member **12** extends outward, in the vehicle width direction, beyond an outside face **16b** of the crash can **16.**

Accordingly, the cross rear-wall portion **41** is parallel to the inner recess-portion bottom edge **26a** and the outer recess-portion bottom edge **36a,** has the same length as these edges **26a, 36a** in the extension direction, and contact these edges **26a, 36a.** Likewise, the cross upper-wall portion **42** is parallel to the inner recess-portion upper edge **26b** and the outer recess-portion upper edge **36b,** has the same length as these edges **26b, 36b** in the extension direction, and contact these edges **26b, 36b.**

A part of the front side frame **11** which excludes the inner recess portion **26** and the outer recess portion **36,** that is - the front end face **11f** contacts the cross upper-flange portion **44** and the cross lower-flange portion **45** from behind.

An upper end of the upper flange portion **11c** of the front side frame **11** is located at the same level as an upper end of the cross upper-flange portion **44** in the vertical direction. A lower end of the lower flange portion **11d** of the front side frame **11** is located at the same level as a lower end of the cross lower-flange portion **45** in the vertical direction.

The first cross member **12** fits into the inner recess portion **26** and the outer recess portion **36** of the front side frame **11** from the forward side and is fixed to these recess portions **26,** 36. Specifically, the respective edges **26a - 26c** of the inner recess portion **26** and the respective edges **36a - 36c** of the outer recess portion **36** are respectively joined to the cross rear-wall portion **41,** the cross upper-wall portion **42,** and the cross lower-wall portion **43** of the first cross member **12** by line welding.

Further, at the first cross member **12,** the cross upper-flange portion **44** and the cross lower-flange portion **45** are fixed to the front end face **11f** of the front side frame **11** by line welding.

The crash can **16** is fixedly fastened to the first cross member **12** from the forward side. Specifically, the crash can **16** is fixedly fastened to the cross upper-flange portion **44,** the cross lower-flange portion **45,** and the first cross front-wall portion **48** of the first cross member **12** via the set plate **18.** Accordingly, the cross upper-flange portion **44,** the cross lower-flange portion **45,** and the first cross front-wall portion **48** of the first cross member **12** serve as a set plate to fix the crash can **16.**

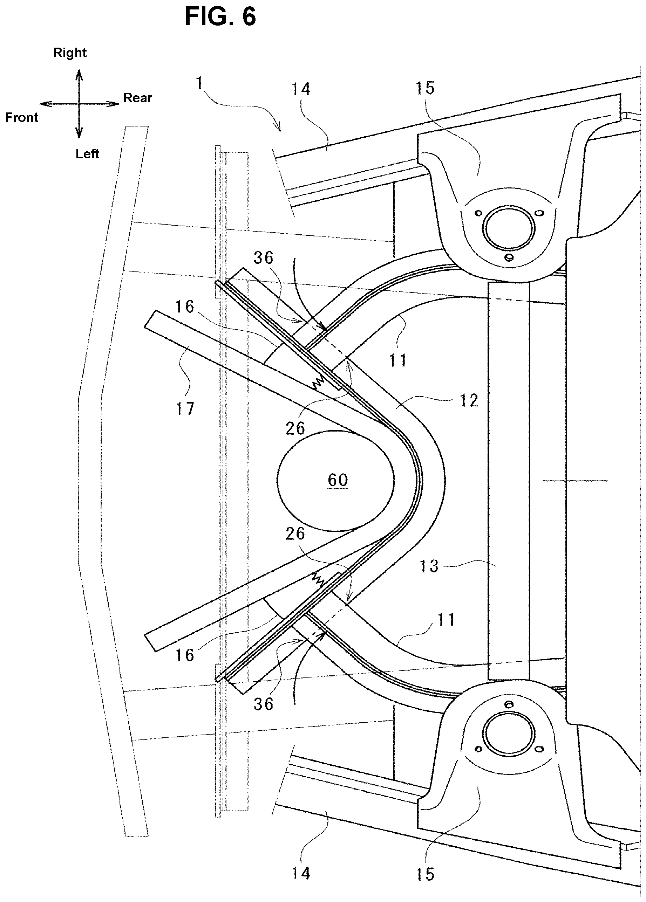

FIG. 6 is a plan view schematically showing a deformation manner of the front structure **1** of the vehicle in the pole frontal-collision of the vehicle. As shown in FIG. **6****,** when a pole-shaped obstacle **60** hits against a central part, in the vehicle width direction, of the front structure **1** of the vehicle, the first cross member **12** is deformed, together with the bumper reinforcement **17** and the sub bumper reinforcement **52** (see FIG. **2****),** such that it has a U-shaped rearward-protrusion shape with its both-side portions moving inward in the plan view.

Herein, the both-side portions, in the vehicle width direction, of the first cross member **12** are fixed such that they fit into the respective inner recess portions **26** and the respective outer recess portions **36** which are formed at the respective front end portions of the pair of right-and-left front side frames **11.** Consequently, since the collision load applied to the first cross member **12** is received in the axial direction **A** of the front side frames **11,** the shearing load applied to the fixation portions of the first cross member **12** to the pair of right-and-left front side frames **11** is reduced. Thereby, the first cross member **12** is suppressed from being detached from the front side frames **11,** and the proper fixation is maintained.

Accordingly, the right-and-left front side frames **11** are drawn inward due to the U-shaped deformation of the first cross member **12,** so that the front side frames **11** are deformed inward in a curved manner. Thus, the collision load applied to the central part, in the vehicle width direction, of the vehicle is absorbed not only by the U-shaped deformation of the bumper reinforcement **17,** the sub bumper reinforcement **52,** and the first cross member **12** but also by the inward bending of the pair of right-and-left front side frames **11.** Consequently, the absorption performance of the collision load in the pole frontal-collision by means of the front structure **1** can be improved.

The front structure **1** of the vehicle of the present invention performs the following effects.
(1) The front structure **1** of the vehicle comprises a pair of right-and-left front side frames **11** extending in the longitudinal direction and having the closed-cross section perpendicular to the extension direction, respectively, and the first cross member **12** extending in the vehicle width direction between the pair of right-and-left front side frames **11,** wherein each of the front side frames **11** comprises the inner wall portion **11a** which is positioned on the inward side, in the vehicle width direction, thereof, the inner wall portion **11a** has the inner recess portion **26** which is configured such that the front edge **21a** of the inner wall portion **11a** partially retreats rearward, and the both-side portions, in the vehicle width direction, of the first cross member **12** fit into the respective recess portions **26** of the inner walls **11a** from the forward side and are fixed to the inner wall portions **26** of the front side frames **11.**

In the present specification, the description of "the front side frame **11** extends in the longitudinal direction" includes not only a case where it extends in parallel to the vehicle longitudinal direction but also another case where it extends mostly along the vehicle longitudinal direction with a slight inclination angle to the vehicle longitudinal direction.

According to this structure, the both-side portions of the first cross member **12** fit into the respective recess portions **26** of the inner wall portions **11a** of the pair of right-and-left front side frames **11** from the forward side and are fixed to the inner wall portions **11a** of the front side frames **11.** Consequently, since the collision load which is applied to the first cross member **12** due to the pole frontal-collision of the vehicle or the like is supported at the recess portions **26** in the axial direction **A** of the front side frame **11,** the shearing load applied to the fixation portions of the first cross member **12** to the pair of right-and-left front side frames **11** is reduced.

Thereby, the both-side portions of the first cross member **12** are suppressed from being detached from the pair of right-and-left front side frames **11** in the pole frontal-collision of the vehicle. Therefore, the first cross member **12** is deformed such that it has the U-shaped rearward-protrusion shape in the plan view, so that the both front side frames **11** are easily curved inward, in the vehicle width direction, thereof by the shortened distance between the both-side portions of the first cross member **12.** Accordingly, the collision-load absorption performance in the pole frontal-collision of the vehicle can be improved by the first cross member **12** and the pair of right-and-left front side frames **11.**

(2) Each of the front side frames **11** comprises the outer wall portion **11b** which is positioned on the outward side, in the vehicle width direction, thereof, the outer wall portion **11b** has the recess portion **36** which is configured such that the front edge **31a** of the outer wall portion **11b** partially retreats rearward, and the both-side portions, in the vehicle width direction, of the first cross member **12** fit into the respective recess portions **36** of the outer wall portions **11b** from the forward side and are fixed to the outer wall portions **11b** of the front side frames **11.**

According to this structure, the both-side portions of the first cross member **12** fit into the outer recess portions **36** of the outer wall portions **11b** and are fixed to the outer wall portions **11b,** in addition to the inner wall portions **11a.** Consequently, since the collision load applied due to the pole frontal-collision of the vehicle is properly supported at the front side frame **11** in the axial direction **A,** the both-side portions of the first cross member **12** are further suppressed from being detached from the pair of right-and-left front side frames **11.** Accordingly, the collision-load absorption performance in the pole frontal-collision of the vehicle can be further improved.

(3) The first cross member **12** has the cross section perpendicular to the extension direction (the vehicle width direction) which is of the uniform shape over the width direction thereof and comprises the cross rear-wall portion **41** extending in the vertical direction, the cross upper-wall portion **42** extending forward from the upper edge of the cross-rear wall portion **41,** and the cross lower-wall portion **43** extending forward from the lower edge of the cross rear-wall portion **41,** the inner recess portion **26** comprises the inner recess-portion bottom edge **26a** extending in the vertical direction, the inner recess-portion upper edge **26b** extending forward from the upper end portion of the inner recess-portion bottom edge **26a,** and the inner recess-portion lower edge **26c** extending forward from the lower end portion of the inner recess-portion bottom edge **26a.** Further, the outer recess portion **36** comprises the outer recess-portion bottom edge **36a** extending in the vertical direction, the outer recess-portion upper edge **36b** extending forward from the upper end portion of the outer recess-portion bottom edge **36a,** and the outer recess-portion lower edge **36c** extending forward from the lower end portion of the outer recess-portion bottom edge **36a.** Also, the cross rear-wall portion **41** is fixed to the inner recess-portion bottom edge **26a** from the forward side, the cross upper-wall portion **42** is fixed to the inner recess-portion upper edge **26b** from the lower side, and the cross lower-wall portion **43** is fixed to the inner recess-portion lower edge **26c** from the upper side, and/or the cross rear-wall portion **41** is fixed to the outer recess-portion bottom edge **36a** from the forward side, the cross upper-wall portion **42** is fixed to the outer recess-portion upper edge **36b** from the lower side, and the cross lower-wall portion **43** is fixed to the outer recess-portion lower edge **36c** from the upper side.

According to this structure, since the first cross member **12** is supported by the inner recess portions **26** and/or the outer recess portions **36** in the vertical direction and from the rearward side, the both-side portions of the first cross member **12** are suppressed from being detached from the pair of right-and-left front side frames **11** more.

(4) The first cross member **12** comprises the first cross body portion **40** which includes the cross rear-wall portion **41,** the cross upper-wall portion **42,** the cross lower-wall portion **43,** the cross upper-flange portion **44** extending upward from the front edge of the cross upper-wall portion **42,** and the cross lower-flange portion **45** extending downward from the front edge of the cross lower-wall portion **43** and the first cross front-wall portion **48** which extends vertically between the cross upper-flange portion **44** and the cross lower-flange portion **45** and is fixed to the first cross body portion **40** from the forward side.

According to this structure, since the first cross member **12** is formed by the first cross body portion **40** and the first cross front-wall portion **48** so as to have the closed-cross section, the rigidity of the first cross member **12** can be improved easily.

(5) The cross rear-wall portion **41** is fixed to the inner recess-portion bottom edge **26a** and/or the outer recess-portion bottom edge **36a** by the line welding, the cross upper-wall portion **42** is fixed to the inner recess-portion upper edge **26b** and/or the outer recess-portion upper edge **36b** by the line welding, and the cross lower-wall portion **43** is fixed to the inner recess-portion lower edge **26c** and/or the outer recess-portion lower edge **36c** by the line welding.

According to this structure, since the both-side portions of the first cross member **12** are firmly fixed to the inner recess portions **26** and/or the outer recess portions **36** by the line welding at their three sides, the both-side portions of the first cross member **12** are further suppressed from being detached from the pair of right-and-left front side frames **11.**

(6) The both-side portions of the first cross member **12** protrude outward, in the vehicle width direction, from the pair of right-and-left front side frames **11.**

According to this structure, even in a case where the collision load is applied to an outward side, in the vehicle width direction, of the front side frames **11,** the collision load can be absorbed easily by a portion of the first cross member **12** which protrudes outward, in the vehicle width direction, beyond the front side frames **11.**

(7) The front structure **1** further comprises a pair of right-and-left crash cans **16** which are provided at the respective front sides of the pair of right-and-left front side frames **11** via the first cross member **12** and extend forward from the first cross member **12.**

According to this structure, the collision load applied to the crash cans **16** can be transmitted, in the longitudinal direction, to the both-side portions of the first cross member **12** which are positioned just behind the crash cans **16.** Since the both-side portions of the first cross member **12** are supported by the inner recess portions **26** and/or the outer recess portions **36** of the front side frames **11** in the axial direction **A,** the frontal-collision load is transmitted to the front side frames **11** efficiently and absorbed by the front side frame **11** effectively.

(8) The both-side portions of the first cross member **12** protrude outward, in the vehicle width direction, from the pair of right-and-left crash cans **16.**

According to this structure, even in a case where the collision load is applied to an outward side, in the vehicle width direction, of the crash cans **16,** the collision load can be absorbed easily by a portion of the first cross member **12** which protrudes outward, in the vehicle width direction, beyond the crash cans **16.**

(9) The first cross member **12** has the cross section perpendicular to the extension direction (the vehicle width direction) which is of the uniform shape over its width direction and comprises the first cross front-wall portion **48** extending in the vertical direction and the first cross body portion **40** which is joined to the first cross front-wall portion **48** from the rearward side and forms the closed-cross section together with the first cross front-wall portion **48,** and the crash can **16** is fixed to the first cross front-wall portion **48.**

According to this structure, since the first cross front-wall portion **48** serves as the set plate to fix the rear end portion of the crash can **16,** no other particular plate is necessary.

(10) The pair of right-and-left front side frames **11** are configured such that the respective front end faces **11f** are fixed to the cross upper-flange portions **44** and the cross lower flange portions **45** from the rearward side.

According to this structure, the first cross member **12** is supported at the front end faces **11f** of the front side frames **11** in the axial direction in addition to the inner recess portions **26** and/or the outer recess portions **36.** Thereby, since the support rigidity of the first cross member **12** by means of the front side frames **11** increases, the collision load transmitted to the fixation portions of the first cross member **12** to the front side frames **11** in the pole frontal-collision can be dispersed to the inner recess portions **26** and/or the outer recess portions **36** and the front end faces **11f** of the front side frames **11.** Accordingly, the first cross member **12** is suppressed from being detached from the front side frames **11** more properly.

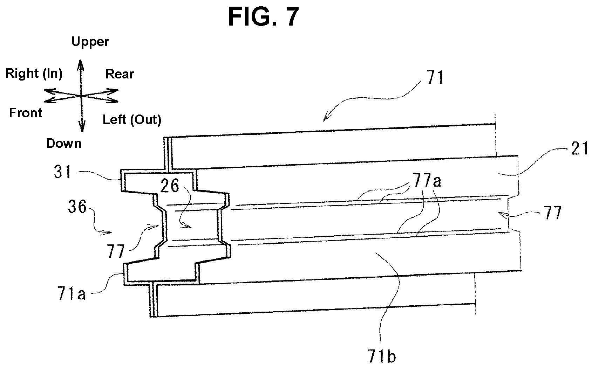

FIG. **7** is a perspective view showing a front side frame **71** alone according to a modification, which corresponds to FIG. **3****.** The front side frame **71** is different from the front side frame **11** of the above-described embodiment in a structure in which a groove portion **77** is provided at an inner wall portion **71a** and an outer wall portion **71b.**

The groove portion **77** is configured to be recessed from the inner wall portion **71** and the outer wall portion **71b** in the vehicle width direction, and extends rearward from the respective recess-portion bottom edges **26a, 36a** of the inner recess portion **26** and the outer recess portion **36.** Bending ridgelines **77a** which partition the groove portion 77 extend rearward from the respective recess-portion bottom edges **26a, 36a.** The bending ridgelines **77a** increase the rigidity of the front side frame **71** along the axial direction **A** of the inner wall portion **71a** and the outer wall portion **71b,** and also increase its bending rigidity along the vehicle width direction. Further, the inner recess portion **26** and the outer recess portion **36** are firmly supported from the rearward side by the high-rigidity bending ridgelines **77a.**

Thus, according to the front side frame **71,** the absorption performance for the collision load applied in the axial direction **A** in a so-called small overlap collision of the vehicle, for example, can be improved, and also the absorption performance for the collision load which is applied when the front side frame **71** is curved inward in the pole frontal-collision of the vehicle can be improved.

While the groove portion **77** extends rearward from the recess-portion bottom edges **26a, 36a** in the above-described modification, the bending ridgelines **77a** may be configured to extend rearward from the recess-portion upper edges **26b, 36b** and/or the recess-portion lower edges **26c, 36c.** That is, the groove portion **77** may be configured such that the bending ridgelines **77a** connect to the edges of the inner recess portion **26** and/or the outer recess portion **36** in order to increase the support rigidity of the inner recess portion **26** and/or the outer recess portion **36.**

While an example in which the recess-shaped groove portion **77** is formed at the inner wall portion **71a** and the outer wall portion **71b** is described in the above-described modification, a protrusion portion (not illustrated) which protrudes in the vehicle width direction and extends rearward from the inner recess portion **26** and/or the outer recess portion **36** may be provided additionally or alternatively. This protrusion portion can increase the support rigidity of the inner recess portion **26** and/or the outer recess portion **36** as well.

While the inner recess portion **26** and the outer recess portion **36** of the trapezoidal shape in the above-described embodiment, any shape, such as triangle, rectangular, polygonal, or semicircular shape, is applied as long as the first cross member **12** fits into these recess portions **26, 36.** Herein, it is preferable that the vertical dimension (size) of the inner recess portion **26** and the outer recess portion **36** decrease toward the rearward side so that the longitudinal load can be received at both the upper-and-lower edges of the respective recess portions in order to increase the support rigidity, in the longitudinal direction, of the first cross member **12.**

While both of the inner recess portion **26** and the outer recess portion **36** are provided at the front side frame **11** in the above-described embodiment, either one of those may be provided.

Further, the inner recess portion **26** and the outer recess portion **36** may have different shapes from each other as long as the cross section of the first cross member **12** is complementary to the inner recess portion **26** and the outer recess portion **36** of the front side frame **11.** For example, in a case where the first cross member **12** has different cross-section shapes at respective fitting positions of the inner recess portion **26** and the outer recess portion **36,** the shapes of the inner recess portion **26** and the outer recess portion **36** are different from each other.

Moreover, the inner recess portion **26** and the outer recess portion **36** may be located at any vertical position which is different from the center of each of the inner wall portion **11a** and the outer wall portion **11b** in the above-described embodiment. Also, these portions **26, 36** may be configured to be open at the upper side or the lower side. However, it is preferable that these portions **26, 36** be formed within a vertical scope of the inner wall portion **11a** and the outer wall portion **11b,** not being open at the upper side or the lower side, in order to support the first cross member **12** in the vertical direction.

The front side frame **11** and/or the first cross member **12** may be made of an aluminum extruded member, for example, not of the steel member.

The first cross member **12** may be joined to the front side frame **11** by not only the line welding but also any other means, such as spot welding, fastening, or adhesion.

While the fixation structure according to the present invention has been exemplified as an example where the both-side portions of the first cross member **12** are fixed to the front side frame **11,** it is applicable to the subframe **50** similarly. For example, the fixation structure of the present invention may be applied to a case (not illustrated) where a pair of right-and-left front side frames extending in the longitudinal direction at both-side portions of the subframe **50** and a first sub cross member extending in the vehicle width direction between the pair of right-and-left front side frames at a front end portion of the subframe **50** are fixed together. In this case, the collision load in the pole frontal collision of the vehicle can be properly absorbed at the subframe **50.**

## Claims

1. A front structure of a vehicle, comprising:
a pair of right-and-left front side frames (11) extending in a longitudinal direction and having a closed-cross section perpendicular to an extension direction thereof, respectively; and
a cross member (12) extending in a width direction between the pair of right-and-left front side frames (11),
wherein each of said front side frames (11) comprises an inner wall portion (11a), which is positioned on an inward side thereof, in the width direction, said inner wall portion (11a) has an inner recess portion (26), which is configured such that a front edge (21a) of the inner wall portion (11a) partially retreats rearward, and both-side portions, in the width direction, of said cross member (12) fit into said inner recess portions (26) of the inner wall portions (11a) from a forward side and are fixed to the inner wall portions (11a) of the front side frames (11).

2. The front structure of claim 1, wherein each of said front side frames (11) comprises an outer wall portion (11b) which is positioned on an outward side thereof, in the vehicle width direction, said outer wall portion (11b) has an outer recess portion (36) which is configured such that a front edge (31a) of the outer wall portion (11b) partially retreats rearward, and the both-side portions, in the width direction, of said cross member (12) fit into said outer recess portions (36) of the outer wall portions (11b) from the forward side and are fixed to the outer wall portions (11b) of the front side frames (11).

3. The front structure of claim 1 or 2, wherein said cross member (12) has a cross section perpendicular to an extension direction thereof which is of a uniform shape over its extension and comprises a cross rear-wall portion (41) extending in a vertical direction, a cross upper-wall portion (42) extending forward from an upper edge of said cross rear-wall portion (41), and a cross lower-wall portion (43) extending forward from a lower edge of said cross rear-wall portion (41), said inner and, optionally, outer recess portions (26, 36) each comprise a recess-portion bottom edge (26a, 36a) extending in the vertical direction, a recess-portion upper edge (26b, 36b) extending forward from an upper end portion of said recess-portion bottom edge (26a, 36a), and a recess-portion lower edge (26c, 36c) extending forward from a lower end portion of said recess-portion bottom edge (26a, 36a), said cross rear-wall portion (41) is fixed to said recess-portion bottom edges (26a, 36a) from the forward side, said cross upper-wall portion (42) is fixed to said recess-portion upper edges (26b, 36b) from a lower side, and said cross lower-wall portion (43) is fixed to said recess-portion lower edges (26c, 36c) from an upper side.

4. The front structure of claim 3, wherein said cross member (12) comprises a cross body portion (40), which includes said cross rear-wall portion (41), said cross upper-wall portion (42), said cross lower-wall portion (43), a cross upper-flange portion (44) extending upward from a front edge of said cross upper-wall portion (42), and a cross lower-flange portion (45) extending downward from a front edge of said cross lower-wall portion (43), and further comprises a cross front-wall portion (48) which extends vertically between said cross upper-flange portion (44) and said cross lower-flange portion (45) and is fixed to said cross body portion (40) from the forward side.

5. The front structure of claim 3 or 4, wherein said cross rear-wall portion (41) is fixed to said recess-portion bottom edges (26a, 36a) by line welding, said cross upper-wall portion (42) is fixed to said recess-portion upper edges (26b, 36b) by line welding, and said cross lower-wall portion (43) is fixed to said recess-portion lower edges (26c, 36c) by line welding.

6. The front structure of any one of the preceding claims, wherein the both-side portions of said cross member (12) protrude outward, in the width direction, from said pair of right-and-left front side frames (11).

7. The front structure of any one of the preceding claims, further comprising a pair of right-and-left impact absorbing members, for example crash cans (16), which are provided at respective front sides of said pair of right-and-left front side frames (11) via said cross member (12) and extend forward from said cross member (12).

8. The front structure of claim 7, wherein the both-side portions of said cross member (12) protrude outward, in the width direction, from said pair of right-and-left impact absorbing members.

9. The front structure of any one of claims 7 to 8, wherein said cross member (12) has a cross section perpendicular to an extension direction thereof which is of a uniform shape over its extension and comprises a cross front-wall portion (48) extending in a vertical direction and a cross body portion (40) which is joined to said cross front-wall portion (48) from a rearward side and forms said closed-cross section together with said cross front-wall portion (48), and said impact absorbing member is fixed to said cross front-wall portion (48).

10. The front structure of any one of claims 4 to 9, wherein said pair of right-and-left front side frames (11) are configured such that respective front end faces (21a, 31a) thereof are fixed to said cross upper-flange portions (42) and said cross lower-flange portions (43) from a rearward side.

11. The front structure of any one of the preceding claims, wherein each of said pair of right-and-left front side frames (11) have side wall portions (11a, 11b) where said recess portions (26, 36) are formed, and groove portions (77) which are recessed in a width direction and extend rearward from said recess portions (26, 36), or protrusion portions which protrude in a width direction and extend rearward from said recess portions (26, 36) are formed at said side wall portion.

12. The front structure of any one of the preceding claims, wherein the front side frames (11) each are closed profiles which comprises a side frame inner (20) positioned on the inward side thereof, in the width direction, and a side frame outer (30) positioned on the outward side thereof, in the vehicle width direction, wherein the side frame inner (20) comprises an inner side-wall portion (21) extending in the vertical direction, an inner upper-wall portion (22) extending outward from an upper edge of the inner side-wall portion (21), an inner lower-wall portion (23) extending outward from a lower edge of the inner side-wall portion (21), an inner upper-flange portion (24) extending upward from an outer edge of the inner upper-wall portion (22), and an inner lower-flange portion (25) extending downward from an outer edge of the inner lower-wall portion (23), and the side frame outer (30) comprises an outer side-wall portion (31) extending in the vertical direction, an outer upper-wall portion (32) extending inward from an upper edge of the outer side-wall portion (31), an outer lower-wall portion (33) extending inward from a lower edge of the outer side-wall portion (31), an outer upper-flange portion (34) extending upward from an inner edge of the outer upper-wall portion (32), and an outer lower-flange portion (35) extending downward from an inner edge of the outer lower-wall portion (33), wherein the inner upper-flange portion (24) and the outer upper-flange portion (34) are joined together, and also the inner lower-flange portion (25) and the outer lower-flange portion (35) are joined together.

13. A vehicle having a front structure according to any one of the preceding claims.
